Europäisches Patentamt

European Patent Office (11) Publication number: **0 015 899**

Office européen des brevets **B1**

## (12) EUROPEAN PATENT SPECIFICATION

(45) Date of publication of patent specification: **03.02.82** (51) Int. Cl.³: **C 08 L 27/08, C 09 D 3/74, C 09 D 5/34**

(21) Application number: **78900191.4**

(22) Date of filing: **17.07.78**

(86) International application number: **PCT/GB78/00005**

(87) International publication number: **WO 80/00256 21.02.80 Gazette 80/4**

(54) Improved composition and method of use.

(43) Date of publication of application: **01.10.80 Bulletin 80/20**

(45) Publication of the grant of the European patent: **03.02.82 Bulletin 82/5**

(84) Designated Contracting States: **DE FR SE**

(56) References cited:
**— None —**

(73) Proprietor: **LIVINGSTONE, Colin David Crosby House 124 Crowstone Road Westcliff-on-Sea, Essex (GB)**

(72) Inventor: **LIVINGSTONE, Colin David Crosby House 124 Crowstone Road Westcliff-on-Sea, Essex (GB)**

(74) Representative: **Marsh, Roy David et al, Brewer & Son 5-9, Quality Court Chancery Lane London WC2A 1HT (GB)**

Courier Press, Leamington Spa, England.

Improved composition and method of use

Technical Field

This invention relates to a composition comprising a mixture of a synthetic resin and organic fibres and to methods of using such a composition.

Background Art

The deleterious effects on walls and ceilings of water condensation on the surfaces thereof have long been recognised. Previous proposals to mitigate these effects have, in the main, been directed towards providing a heat-insulating layer in the wall or ceiling so as to reduce flow of heat into the materials of the wall or ceiling from the condensation-affected surface thereof. The provision of such heat-insulating layers has, with previous proposals, been costly and the layers themselves are sometimes extravagant in their use of space.

Disclosure of Invention and the Ways in which it can be Used

The invention stems from the need for a versatile composition which can be easily applied to a surface by brushing or spraying and which hardens to form a solid material (e.g. a lining or filler) which has excellent properties of thermal insulation and fire retardment and which is useful as a means of mitigating the effects on the materials beneath the surface of condensation of water on the surface.

According to the invention a composition comprises a mixture of an aqueous polyvinylidene chloride copolymer emulsion and organic fibres. The vinylidene chloride monomer may represent at least 75% by weight of the total monomers from which the copolymer is derived, and preferably represents between 88% and 93% by weight of the total monomers. The mixture may include inorganic fibres such as chopped glass fibre mat.

When such a composition is applied to a surface and allowed to dry and harden it possesses excellent properties of thermal insulation, impermeability to water and fire retardment. The fire retardment of the composition may be improved by including an additive such as 2-ethyl hexyl diphenyl phosphate.

The organic fibres are preferably of wood and may be wood waste such as small particles of hardwood, or one of various grades of wood flour, such as 300 mesh.

The invention includes within its scope a method of applying the foregoing composition to a surface and allowing the composition to dry and harden to form a lining or filler when set. The invention also includes a method of moulding the foregoing composition or alternatively applying the foregoing composition to a surface of a former which imparts a desired shape to the composition during setting and which is separated from the composition when set.

Best Modes of Carrying Out the Invention

Some preferred compositions and methods of use will now be described by way of example.

A preferred composition has the following constituents, the stated proportions being by weight:—

| | |
|---|---|
| Synthetic resin | 75% |
| Wood flour (300 mesh) | 14.9% |
| Calcium carbonate | 5% |
| Titanium dioxide | 5% |
| Antibacterial preparation | 0.1% |

The resin is an aqueous polyvinylidene chloride copolymer emulsion and may be that sold by Scott Bader Company Limited of Wellingborough, Northamptonshire, England under the trade designation "Polidene 33-001" or "Polidene 33-075". The latter resin is used where greater viscosity of the composition is desired. The calcium carbonate is included to hasten drying of the composition and the titanium dioxide is included principally for whitening the composition, Where the composition is to be applied to a surface treated with chlorinated rubber, xylol (trade name) may be added to the composition.

This preferred composition has been found to be particularly suitable for lining the internal surfaces of boat hulls made of glass reinforced plastics (G.R.P.) material. The G.R.P. surface to be lined is preferably lightly sanded down and any lumps or protuberances removed. Polyvinyl acetate (P.V.A.) adhesive is then applied to the G.R.P. surface and allowed to become partially dry or "tacky". A coating of the composition described above is then applied to the G.R.P. surface, either by means of a brush or a spray gun. The coating of the composition is allowed to set and harden at ambient temperature (provided this is more than 15°C) to provide a lining which may be of the order of 1 mm thick. Further coatings of the composition (with or without a keying application of P.V.A. adhesive) can be applied until an aggregate lining thickness of 2 to 3 mm is achieved, allowing the previous coating to dry before applying a subsequent coating.

The lining not only forms a decorative finish to the hull but also acts as a very good fire retardment. The lining possesses good thermal insulation properties and therefore greatly reduces condensation, a major problem in boats particularly in winter. When set, such a lining is not water-sensitive and is substantially impermeable to water, so that any water which condenses on its surface does not pass into the materials beneath the surface. The composition may incorporate a colouring agent to impart a desired colour to the lining throughout the thickness thereof.

The foregoing method of lining a G.R.P. hull can also be applied to boat hulls formed of ferro-crete, marine ply, timber or steel. Further, car bodies or caravans, whether made of G.R.P. or of timber, can also be lined. Metal should be painted with a primer before applying the composition.

The composition may be used to cover asbestos to eliminate health hazards due to contact with asbestos, particularly inhalation of asbestos dust. Exposed surfaces of asbestos can simply be covered and sealed with the composition. Alternatively, sheets of asbestos can be completely covered in the composition before the sheets are used.

The anti-condensation properties of the lining make the composition extremely suitable for application to the internal surfaces of walls and ceilings in buildings. The composition is sprayed or brushed onto the surface and allowed to set to form a lining of 1 to 2 mm thick. Since the composition is aqueous, the presence of surface moisture on walls and ceilings does not prevent bonding of the composition to these surfaces. The impermeable lining constitutes a barrier to vapour on that surface of walls and ceilings where condensation occurs, so that the plaster of the walls and ceilings cannot then become wet with consequent reduction in their heat insulating properties. Hence interstitial condensation (the condensation of water within pervious walls) which frequently damages plaster cannot occur. Mould growth does not occur on the lining because any slight condensation which might occur in a steamy room such as a bathroom is soon dissipated by later evaporation.

When Polidene 33-075 is used as the resin the resulting composition has stronger bonding properties. Accordingly, where the surface to be lined is smooth it is convenient to mix a composition including Polidene 33-075 with a composition including Polidene 33-001 in proportions by weight between 10% and 50%. As an alternative to Polidene 33-075 in this mixture, a P.V.A. resin sold by Scott Bader Company Limited under the trade name "Texicote 03-004" may be used.

In addition to being used as a lining, the composition can be applied to a surface which acts as a former so as to impart a desired shape to the composition whilst it is hardening. The composition can be used to form a boat hull in this way by plastering or spraying the composition over two layers of non-ferrous metal mesh laid in mutually perpendicular directions over wooden supports shaped so that the mesh assumes the form of a boat hull. Plastics sheeting (e.g. polythene) is inserted between the wooden supports and the two layers of metal mesh.

Metal ribs are placed at suitable intervals over the wooden supports and under the wire mesh and fastened to the latter. The metal ribs provide additional strength and enable the composition to penetrate the mesh which forms an internal reinforcement embedded in the composition when the latter is set. When the composition is set, further coatings can be applied, preferably after a keying layer of Polidene 33-075 adhesive has been applied to the partially formed boat hull. The wooden supports are removed after the hull has been built up to the required thickness and has completely hardened.

Boat hulls can also be made by the alternate applications of layers of chopped glass fibre reinforcement and layers of the composition.

The composition can be used to make flooring tiles in the following manner. Panels of plywood (e.g. 3 mm thick) and of a size corresponding to the desired size of tiles (e.g. 61 cm by 61 cm) are covered on both surfaces and all edges by a 1 mm layer of the composition, resulting in composite boards of the order of 5 mm thick. One such board is placed in the base of a recessed mould having a size corresponding to the desired size of tile. A 3 mm layer of composition is inserted into the mould on the board, a further upper board being placed in the mould above the composition so that the latter is sandwiched between the two spaced boards. When the composition has hardened the completed tile is removed from the mould. Each tile has a vapour barrier on both its upper and lower surfaces and has excellent insulation and fire retardment properties.

As mentioned, the binder of the composition is an aqueous polyvinylidene chloride copolymer emulsion. In order to obtain the best fire retardment and anti-condensation properties the vinylidene chloride content of the copolymer should be as high as possible. Whilst some improvement in fire retardment would be obtained with copolymers containing as little as 50% vinylidene chloride monomer, in general this monomer should represent at least 75% by weight of the total monomers from which the copolymer is derived. Preferably the vinylidene chloride monomer should be 88—93% of the total monomers used.

The comonomer component may comprise an acrylate or methacrylate or a mixture thereof, for example a mixture of methyl methacrylate and ethyl acrylate, or it may comprise acrylonitrile with an acrylate or methacrylate. Other monomers may be used if desired for instance vinyl chloride, styrene, vinyl acetate, acrylamide, acrylic acid and the like.

In addition, a plasticiser may be added to the copolymer and a fire retardant such as 2-ethyl hexyl diphenyl phosphate may be employed with advantage.

The composition may include inorganic fibres, e.g. glass fibres, in addition to the wood flour.

It should be recognised that the resin used in the compositions has a characteristic setting temperature below which the ambient temperature should not fall while the resin is hardening. In general, a temperature of 15°C is required for hardening of resins used in this invention.

## Claims

1. A composition characterised in that it comprises a mixture of an aqueous polyvinylidene chloride copolymer emulsion and organic fibres.

2. A composition according to claim 1, characterised in that the vinylidene chloride monomer represents at least 75% by weight of the total monomers from which the copolymer is derived.

3. A composition according to claim 2, characterised in that the vinylidene chloride monomer represents between 88% and 93% by weight of the total monomers.

4. A composition according to any of the preceding claims, characterised in that the comonomer comprises an acrylate or methacrylate or a mixture thereof.

5. A composition according to any of claims 1 to 3 characterised in that the comonomer comprises acrylonitrile with an acrylate or methacrylate.

6. A composition according to any of the preceding claims, characterised in that 2-ethyl hexyl diphenyl phosphate is included as a fire retardant.

7. A composition according to any of the preceding claims, characterised in that the organic fibres are of wood.

8. A composition according to claim 7, characterised in that the organic fibres are wood flour of 300 mesh.

9. A composition according to any of the preceding claims, characterised in that calcium carbonate is included to hasten drying and hardening of the composition after the latter has been exposed to the air.

10. A method of using a composition characterised in that the composition of any of the preceding claims is applied to a surface and is allowed to dry and harden to form a lining or filler when set.

11. A method according to claim 10, characterised in that the surface is first coated with polyvinyl acetate adhesive which is allowed to become tacky before the composition is applied.

12. A method according to claim 10 or 11, characterised in that the composition is applied to the internal surface of a boat hull made of glass reinforced plastics material, when set the composition forming an internal lining on the boat hull.

13. A method according to claim 10 or 11, characterised in that the composition is applied to the interior walls or ceiling of a building to reduce condensation.

14. A method of using a composition characterised in that the composition of any of claims 1 to 9 is applied to the surface of a former which imparts a desired shape to the composition when set and which is separated from the composition when set.

15. A method of making floor tiles characterised by the step of inserting the composition of any of claims 1 to 9 in a mould between rigid boards.

16. A method according to claim 15, characterised in that each rigid board comprises a panel entirely covered by a hardened layer of the composition of any of claims 1 to 9.

## Revendications

1. Composition caractérisée en ce qu'elle comprend un mélange d'une émulsion aqueuse d'un copolymère de chlorure de polyvinylidène et de fibres organiques.

2. Composition suivant la revendication 1, caractérisée en ce que le chlorure de vinylidène monomère représente au moins 75% en poids des monomères totaux dont dérive le copolymère.

3. Composition suivant la revendication 2, caractérisée en ce que le chlorure de vinylidène monomère représente entre 88 et 93% en poids des monomères totaux.

4. Composition suivant l'une quelconque des revendications précédentes, caractérisée en ce que le comonomère est un acrylate ou un méthacrylate, ou un mélange de deux-ci.

5. Composition suivant l'une quelconque des revendications 1 à 3, caractérisée en ce que le comonomère comprend de l'acrylonitrile avec en acrylate ou un méthacrylate.

6. Composition suivant l'une quelconque des revendications précédentes, caractérisée en ce que du phosphate de 2-éthyl hexyl diphényle est incorporé comme agent ignifugeant.

7. Composition suivant l'une quelconque des revendications précédentes, caractérisée en ce que les fibres organiques sont du bois.

8. Composition suivant la revendication 7, caractérisée en ce que les fibres organiques sont de la farine de bois de 0,05 mm environ.

9. Composition suivant l'une quelconque des revendications précédentes, caractérisée en ce que du carbonate de calcium est incorporé pour accélérer le séchage et le durcissement de la composition lorsque cette dernière a été exposée à l'air.

10. Procédé d'utilisation d'une composition, caractérisée en ce qu'on applique la composition suivant l'une quelconque des revendications précédentes sur une surface et on la laisse sécher et durcir pour former un revêtement ou un garnissage lorsqu'elle est solidifiée.

11. Procédé suivant la revendication 10, caractérisé en ce qu'on revêt d'abord la surface avec un adhésif à base de polyacétate de vinyle qu'on laisse devenir collant avant l'application de la composition.

12. Procédé suivant la revendication 10 ou 11, caractérisé en ce qu'on applique la composition sur la surface interne d'une coque de bateau en matière plastique renforcée de verre, la composition formant en se solidifiant un revêtement interne sur la coque du bateau.

13. Procédé suivant la revendication 10 ou 11, caractérisé en ce qu'on applique la composition sur les murs intérieurs out le plafond d'une bâtiment pour réduire la condensation.

14. Procédé d'utilisation d'une composition, caractérisé en ce qu'on applique la composition suivant l'une quelconque des revendications 1 à 9 sur la surface d'un moule qui confère la forme désirée à la composition lorsqu'elle se solidifie, et qui est séparé de la composition lorsqu'elle est solidifiée.

15. Procédé de fabrication de carreaux de sol, caractérisé en ce qu'on insère la composition suivant l'une quelconque des revendications 1 à 9 dans un moule entre des plaques rigides.

16. Procédé suivant la revendication 15, caractérisé en ce que chaque plaque rigide est constituée d'une plaque entièrement recouverte d'une couche durcie de la composition suivant l'une quelconque des revendications 1 à 9.

Patentansprüche

1. Zusammensetzung, dadurch gekennzeichnet, daß sie umfaßt eine Mischung aus einer wäßrigen Polyvinylidenchlorid-Copolymer-Emulsion und organischen Fasern.

2. Zusammensetzung nach Anspruch 1, dadurch gekennzeichnet, daß das Vinylidenchloridmonomere mindestens 75 Gew.-% der Gesamtmonomeren ausmacht, von denen das Copolymere abgeleitet ist.

3. Zusammensetzung nach Anspruch 2, dadurch gekennzeichnet, daß das Vinylidenchloridmonomere 88 bis 93 Gew.-% der Gesamtmonomeren ausmacht.

4. Zusammensetzung nach einem der vorhergehenden Ansprüche, dadurch gekennzeichnet, daß das Comonomere ein Acrylat oder Methacrylat oder eine Mischung davon ist.

5. Zusammensetzung nach einem der Ansprüche 1 bis 3, dadurch gekennzeichnet, daß es sich bei dem Comonomeren um Acrylnitril und ein Acrylat oder Methacrylat handelt.

6. Zusammensetzung nach einem der vorhergehenden Ansprüche, dadurch gekennzeichnet, daß sie als flammwidrig machendes Mittel 2-Äthylhexyldiphenylphosphat enthält.

7. Zusammensetzung nach einem der vorhergehenden Ansprüche, dadurch gekennzeichnet, daß die organischen Fasern aus Holz bestehen.

8. Zusammensetzung nach Anspruch 7, dadurch gekennzeichnet, daß die organischen Fasern aus Holzmehl von 0,05 mm bestehen.

9. Zusammensetzung nach einem der vorhergehenden Ansprüche, dadurch gekennzeichnet, daß sie zur Beschleunigung der Trockung und zur Aushärtung der Zusammensetzung, nach-dem diese Luft ausgesetzt worden ist, Calciumcarbonat enthält.

10. Verfahren zur Verwendung einer Zusammensetzung, dadurch gekennzeichnet, daß die Zusammensetzung nach einem der vorhergehenden Ansprüche auf eine Oberfläche aufgebracht wird und trocknen und aushärten gelassen wird unter Bildung einer Auskleidung oder Füllung nach dem Abbinden.

11. Verfahren nach Anspruch 10, dadurch gekennzeichnet, daß die Oberfläche zuerst mit einem Polyvinylacetatklebstoff beschichtet wird, den man klebrig werden läßt, bevor die Zusammensetzung aufgebracht wird.

12. Verfahren nach Anspruch 10 oder 11, dadurch gekennzeichnet, daß die Zusammensetzung auf die innere Oberfläche eines Bootskörpers aus glasfaserverstärktem Kunststoffmaterial aufgebracht wird, wobei nach dem Abbinden die Zusammensetzung eine innere Verkleidung auf dem Bootskörper bildet.

13. Verfahren nach Anspruch 10 oder 11, dadurch gekennzeichnet, daß die Zusammensetzung auf die Innenwände oder die Decke eines Gebäudes aufgebracht wird, um die Kondensation zu vermindern.

14. Verfahren zur Verwendung einer Zusammensetzung, dadurch gekennzeichnet, daß die Zusammensetzung nach einem der Ansprüche 1 bis 9 auf die Oberfläche eines Formgebers aufgebracht wird, welcher der Zusammensetzung nach dem Abbinden die gewünschte Gestalt verleiht und nach dem Abbinden von der Zusammensetzung getrennt wird.

15. Verfahren zur Herstellung von Fußbodenplatten, gekennzeichnet durch die Stufe der Einführung der Zusammensetzung nach einem der Ansprüche 1 bis 9 in eine Form zwischen steifen Platten.

16. Verfahren nach Anspruch 15, dadurch gekennzeichnet, daß jede steife Platte eine Platte darstellt, die von einer ausgehärteten Schicht der Zusammensetzung nach einem der Ansprüche 1 bis 9 vollständig bedeckt ist.